# EUROPÄISCHE PATENTSCHRIFT

(11) **EP 3 290 764 B1**
(45) Veröffentlichungstag und Bekanntmachung des Hinweises auf die Patenterteilung: **12.06.2019**
(21) Anmeldenummer: 17175411.2
(22) Anmeldetag: 12.06.2017
(51) Int. Cl.: F16L 3/10, B60R 16/02, F16L 55/035, H02G 3/32

(54) **HALTEVORRICHTUNG FÜR EINEN LÄNGLICHEN GEGENSTAND**
HOLDING DEVICE FOR AN ELONGATED OBJECT
DISPOSITIF DE RETENUE POUR UN OBJET LONGITUDINAL

(30) Priorität: 31.08.2016 DE 102016216370
(43) Veröffentlichungstag der Anmeldung: 07.03.2018
(73) Patentinhaber: ContiTech MGW GmbH, 34346 Hannoversch-Münden (DE)
(72) Erfinder: Kaschka, Simon, 22848 Norderstedt (DE); Kuhlhoff, Florian, 22457 Hamburg (DE)
(74) Vertreter: Finger, Karsten

(56) Entgegenhaltungen:
- WO-A1-2016/129993
- DE-A1- 4 016 050
- DE-U1-202009 015 554
- US-A- 1 805 006

## Beschreibung

Die Erfindung betrifft eine Haltevorrichtung für einen länglichen Gegenstand.

Rohre und Schläuche werden in großer Vielfalt in vielen verschiedenen Bereichen eingesetzt. Dabei ist es erforderlich, diese an anderen Bauteilen entlang zu führen und zu befestigen. Nicht nur im Automobilbereich ist dabei häufig eine Über-Kopf-Montage erforderlich.

Meist werden die erwähnten Leitungen an entsprechenden Stellen angeschraubt, was für den Werker eine besonders aufwendige Arbeitsweise bedingt, da die Bauteile nicht nur befestigt, sondern vorher schon gegen Herunterfallen gesichert werden müssen.

Um die Montage zu vereinfachen, sind die Halterungen häufig an den länglichen Gegenstand bereits vorpositioniert. Sie müssen zum Ausgleich eventueller Ungenauigkeiten zwar noch ggf. bewegbar an den Leitungen angeordnet sein, sollen aber nicht verlierbar sein. Dies schließt beispielsweise ein festes Anspritzen der Halterungen oder Klebeverbindungen aus.

Die DE 101 41 672 C1 zeigt eine derartige Haltevorrichtung. Dabei ist einerseits eine Verdrehung der Halterung auf dem Rohr ausgeschlossen, außerdem ist die Befestigung, einmal angebracht, nicht mehr zerstörungsfrei entfernbar.

Eine Haltevorrichtung nach dem Oberbegriff des Anspruchs 1 ist aus der DE 20 2009 015 554 U1 bekannt.

Der Erfindung lag die Aufgabe zugrunde, eine Haltevorrichtung der eingangs geschilderten Art so zu verbessern, dass die vormontierte Haltevorrichtung nur unverlierbare Bauteile aufweist, in vormontiertem Zustand axial und tangential verschiebbar auf dem länglichen Gegenstand angeordnet ist und mit möglichst wenigen Arbeitsschritten und zerstörungsfrei wieder lösbar an einer vorgesehenen Stelle montierbar ist.

Diese Aufgabe wird dadurch gelöst, dass die Haltevorrichtung zwei Halteteile und mindestens ein einen Kopf aufweisendes Befestigungselement aufweist, wobei jedes Halteteil ein Klemmende und ein jeweils mindestens eine Bohrung aufweisendes, abgewinkeltes Verschlussende aufweist, wobei das Klemmende mit einem zu befestigenden länglichen Gegenstand korrespondiert und die Klemmenden scharnierartig miteinander verbunden sind. Die beiden Halteteile mit ihren Klemmenden sind um den länglichen Gegenstand herumlegbar, wobei die abgewinkelten Verschlussenden derart zu liegen kommen, dass die Bohrungen zueinander fluchten und das Befestigungselement durch die fluchtenden Bohrungen steckbar ist, sodass die abgewinkelten Verschlussenden gegen ein Auseinanderklappen sicherbar sind und dass das dem Kopf des Befestigungselements zugeordnete Verschlussende ein federndes Element aufweist, welches beim Einstecken des Befestigungselements durch den Kopf des Befestigungselements aus seiner Ruhelage elastisch verschiebbar ist, wobei die Ruhelage derart ausgebildet ist, dass das Federelement bei fertig eingestecktem Befestigungselement hinter den Kopf des Befestigungselements zu liegen kommt, wobei ein Herausfallen des Befestigungselements aus den Bohrungen verhinderbar ist.

Durch diese Anordnung ist die Haltevorrichtung auf dem länglichen Gegenstand unverlierbar angeordnet. Das Befestigungselement ist durch das Federelement gegen Herausfallen gesichert und die abgewinkelten Verschlussenden sind durch das durch die Bohrungen gesteckte Befestigungselement gegen versehentliches Öffnen gesichert. Das Befestigungselement ist dann an der vorgesehenen Stelle befestigbar, wobei durch das Anziehen des Befestigungselements die Haltevorrichtung derart zusammendrückbar ist, dass die Klemmenden den länglichen Gegenstand festhalten.

In einer Weiterbildung der Erfindung weisen die Klemmenden eine elastomere Bandage auf.

Durch die Manschette ist ein größerer Spalt zwischen dem länglichen Gegenstand und den Klemmenden überbrückbar. Der längliche Gegenstand ist durch die elastische Manschette vor Beschädigungen geschützt.

In einer Weiterbildung der Erfindung ist die Haltevorrichtung aus einem Kunststoff ausgebildet.

Kunststoff hat den Vorteil, dass eine aufwändige Scharnierkonstruktion zwischen den Klemmenden nicht erforderlich ist, da eine Verringerung der Materialstärke im Scharnierbereich bei Kunststoff leicht realisierbar und für die Beweglichkeit der Klemmenden zueinander ausreichend ist. Das den Kopf der Befestigungselemente sichernde Federelement ist aus Kunststoff leicht herstellbar.

In einer Weiterbildung der Erfindung ist das Federelement Zungenförmig ausgebildet.

Ein zungenförmiges Element lässt sich leicht aus seiner Ruhelage verschieben und gewährleistet eine sichere Rückfederung über den Kopf des Befestigungselements.

In einer Weiterbildung der Erfindung ist das Befestigungselement eine Schraube.

Schrauben weisen üblicherweise einen Kopf auf, sodass ein Einrasten hinter das Federelement sehr einfach möglich ist.

Anhand der Zeichnung wird nachstehend ein Beispiel der Erfindung näher erläutert.

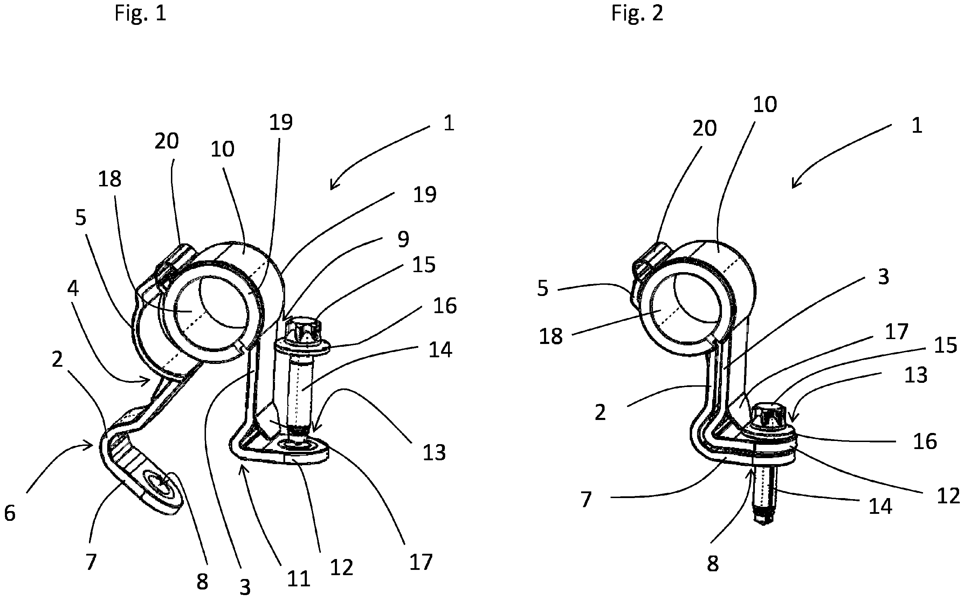

Die Fig.1 zeigt eine erfindungsgemäße Haltevorrichtung 1 in unmontiertem Zustand. Die Haltevorrichtung 1 weist ein erstes Halteteil 2 und ein zweites Halteteil 3 auf.

Das erste Halteteil 2 weist ein Klemmende 4 mit einem etwa halbringförmigen Klemmteil 5 und ein Verschlussende 6 mit einer abgewinkelten Verschlusslasche 7 auf. In der Verschlusslasche 7 ist eine Bohrung 8 angeordnet.

Das zweite Halteteil 3 weist ein Klemmende 9 mit einem etwa halbringförmigen Klemmteil 10 und ein Verschlussende 11 mit einer abgewinkelten Verschlusslasche 12 auf. In der Verschlusslasche 12 ist eine Bohrung 13 angeordnet. Eine Schraube 14 mit einem Kopf 15 und einem Haltebund 16 ist im hier gezeigten Status der Haltevorrichtung 1 noch nicht montiert.

Das zweite Halteteil 3 weist nahe dem Verschlussende 11 eine federnde Haltezunge 17 auf, die vom Halteteil 3 in Richtung auf die Bohrung 13 abragt.

Den Klemmteilen 5 und 10 ist eine geschlitzte, etwa flachringförmige Elastomerbandage 18 mit zwei axial angeordneten Bunden 19 zugeordnet. Eine scharnierartige Kunststoffbrücke 20 verbindet die Klemmteile 5 und 10 derart, dass die beiden Halteteile 1 und 2 klappbar zueinander angeordnet sind.

In Fig. 2 ist die erfindungsgemäße Haltevorrichtung 1 in montiertem Zustand gezeigt. Eine zu haltende Rohrleitung ist zur besseren Übersicht hier nicht gezeigt. Die beiden Klemmteile 5 und 10 sind um die Elastomerbandage 18 herum geschlossen.

Halteteil 2 und 3 sind über die klappbar ausgebildete Kunststoffbrücke 20 zueinander korrespondierend zusammengelegt. Dabei kommen die Bohrungen 8 und 13 fluchtend zueinander zu liegen. Die Schraube 14 ist durch die fluchtenden, hier nicht mehr sichtbaren Bohrungen 8 und 13 hindurch gesteckt und so weit eingeschoben, dass der Haltebund 16 hinter der Haltezunge 17 einrastbar ist. Der Kopf 15 der Schraube 14 ist dabei frei erreichbar. Durch das einrasten des Haltebundes 16 hinter der Haltezunge 17 ist die Schraube 14 unverlierbar in den Bohrungen 8 und 13 angeordnet.

Dadurch, dass die Verschlusslaschen 7 und 12 abgewinkelt an den Halteteilen 2 und 3 angeordnet sind, ist bei eingesteckter Schraube 14 ein Öffnen der Haltevorrichtung 1 nicht möglich. Die Haltevorrichtung 1 ist so unverlierbar, aber noch nicht fest positioniert auf der nicht gezeigten Rohrleitung angeordnet.

Beim Festziehen der Schraube 14 an einem nicht gezeigten Gegenstand sind die Verschlusslaschen 7 und 12 aufeinander pressbar. Die geschlossenen Klemmteile 5 und 10 sind dadurch so gegeneinander verschiebbar, dass über die Elastomerbandage 18 die Haltevorrichtung 1 auf der nicht gezeigten Rohrleitung festklemmbar ist.

### Bezugszeichenliste

### (gehört zur Beschreibung)

1 Haltevorrichtung
2 erstes Halteteil
3 zweites Halteteil
4 Klemmende des Halteteils 2
5 Klemmteil des Halteteils 2
6 Verschlussende des Halteteils 2
7 Verschlusslasche des Verschlussendes 6
8 Bohrung in der Verschlusslasche 7
9 Klemmende des Halteteils 3
10 Klemmteil des Halteteils 3
11 Verschlussende des Halteteils 3
12 Verschlusslasche des Verschlussendes 11
13 Bohrung in der Verschlusslasche 12
14 Schraube
15 Kopf der Schraube 14
16 Haltebund der Schraube 14
17 federnde Haltezunge des Halteteils 3
18 elastomere Bandage
19 Bunde der Elastomerbandage 18
20 scharnierartige Kunststoffbrücke

## Patentansprüche

1. Haltevorrichtung (1) für einen länglichen Gegenstand, wobei die Haltevorrichtung (1) zwei Halteteile (2, 3) und mindestens ein einen Kopf (15) aufweisendes Befestigungselement (14) aufweist, **dadurch gekennzeichnet, dass** jedes Halteteil (2, 3) ein Klemmende (4, 9) und ein jeweils mindestens eine Bohrung (8, 13) aufweisendes, abgewinkeltes Verschlussende (6, 11) aufweist, wobei die Klemmenden (4, 9) mit einem zu befestigenden länglichen Gegenstand korrespondieren und die Klemmenden (4, 9) scharnierartig miteinander verbunden sind, die beiden Halteteile (2, 3) mit ihren Klemmenden (4, 9) um den länglichen Gegenstand herumlegbar sind, wobei die abgewinkelten Verschlussenden (6, 11) derart zu liegen kommen, dass die Bohrungen (8, 13) zueinander fluchten, dass Befestigungselement (14) durch die fluchtenden Bohrungen (8, 13) steckbar ist, sodass die abgewinkelten Verschlussenden (6, 11) gegen ein Auseinanderklappen sicherbar sind und dass das dem Kopf (15) des Befestigungselements (14) zugeordnete Verschlussende (11) ein federndes Element (17) aufweist, welches beim Einstecken des Befestigungselements (14) durch den Kopf (15) des Befestigungselements (14) aus seiner Ruhelage elastisch verschiebbar ist, wobei die Ruhelage derart ausgebildet ist, dass das Federelement (17) bei fertig eingestecktem Befestigungselement (14) hinter den Kopf (15) des Befestigungselements (14) zu liegen kommt, wobei ein Herausfallen des Befestigungselements (14) aus den Bohrungen (8, 13) verhinderbar ist.

2. Haltevorrichtung (1) nach Anspruch 1, **dadurch gekennzeichnet, dass** die Klemmenden (4, 9) eine elastomere Bandage (18) aufweisen.

3. Haltevorrichtung (1) nach Anspruch 1 oder 2, **dadurch gekennzeichnet, dass** die Haltevorrichtung (1) aus einem Kunststoff ausgebildet ist.

4. Haltevorrichtung (1) nach mindestens einem der vorgehenden Ansprüche, **dadurch gekennzeichnet, dass** das Federelement (17) zungenförmig ausgebildet ist.

5. Haltevorrichtung (1) nach mindestens einem der vorgehenden Ansprüche, **dadurch gekennzeichnet, dass** das Befestigungselement (14) eine Schraube ist.

## Claims

1. Holding device (1) for an elongated object, the holding device (1) having two holding parts (2, 3) and at least one fastening element (14) having a head (15),
**characterized in that**
each holding part (2, 3) has a clamping end (4, 9) and an angled closure end (6, 11) each having at least one hole (8, 13), wherein the clamping ends (4, 9) correspond with an elongated object to be fixed and the clamping ends (4, 9) are connected to each other in the manner of a hinge, the two holding parts (2, 3) can be placed with their clamping ends (4, 9) around the elongated object, wherein the angled closure ends (6, 11) come to lie in such a way that the holes (8, 13) are aligned with each other, the fastening element (14) can be inserted through the aligned holes (8, 13) so that the angled closure ends (6, 11) can be secured against unfolding, and **in that** the closure end (11) associated with the head (15) of the fastening element (14) has a sprung element (17) which, when the fastening element (14) is inserted through the head (15) of the fastening element (14), is temporarily displaced elastically out of its rest position, wherein the rest position is formed in such a way that the spring element (17) comes to lie behind the head (15) of the fastening element (14) when the fastening element (14) is finally inserted, wherein the fastening element (14) can be prevented from falling out of the holes (8, 13).

2. Holding device (1) according to Claim 1, **characterized in that** the clamping ends (4, 9) have an elastomer bandage (18).

3. Holding device (1) according to Claim 1 or 2, **characterized in that** the holding device (1) is formed from a plastic.

4. Holding device (1) according to at least one of the preceding claims, **characterized in that** the spring element (17) is formed like a tongue.

5. Holding device (1) according to at least one of the preceding claims, **characterized in that** the fastening element (14) is a screw.

## Revendications

1. Dispositif de retenue (1) pour un objet allongé, le dispositif de retenue (1) présentant deux parties de retenue (2, 3) et au moins un élément de fixation (14) présentant une tête (15), **caractérisé en ce que** chaque partie de retenue (2, 3) présente une extrémité de serrage (4, 9) et une extrémité de fermeture coudée (6, 11), présentant à chaque fois au moins un alésage (8, 13), les extrémités de serrage (4, 9) correspondant à un objet allongé à fixer et les extrémités de serrage (4, 9) étant connectées l'une à l'autre à la manière d'une charnière, les deux parties de retenue (2, 3) pouvant être placées avec leurs extrémités de serrage (4, 9) autour de l'objet allongé, les extrémités de fermeture coudées (6, 11) venant se placer de telle sorte que les alésages (8, 13) soient alignés l'un avec l'autre, l'élément de fixation (14) pouvant être enfiché à travers les alésages alignés (8, 13) de telle sorte que les extrémités de fermeture coudées (6, 11) puissent être fixées pour les empêcher de se détacher par dépliage et **en ce que** l'extrémité de fermeture (11) associée à la tête (15) de l'élément de fixation (14) présente un élément élastique (17) qui, lors de l'enfichage de l'élément de fixation (14), peut être déplacé élastiquement à travers la tête (15) de l'élément de fixation (14) hors de sa position de repos, la position de repos étant réalisée de telle sorte que l'élément de ressort (17), lorsque l'élément de fixation (14) est complètement enfiché, vienne se placer derrière la tête (15) de l'élément de fixation (14), une chute de l'élément de fixation (14) hors des alésages (8, 13) pouvant être évitée.

2. Dispositif de retenue (1) selon la revendication 1, **caractérisé en ce que** les extrémités de serrage (4, 9) présentent un bandage élastomère (18).

3. Dispositif de retenue (1) selon la revendication 1 ou 2, **caractérisé en ce que** le dispositif de retenue (1) est réalisé à partir d'un plastique.

4. Dispositif de retenue (1) selon au moins l'une quelconque des revendications précédentes, **caractérisé en ce que** l'élément de ressort (17) est réalisé en forme de langue.

5. Dispositif de retenue (1) selon au moins l'une quelconque des revendications précédentes, **caractérisé en ce que** l'élément de fixation (14) est une vis.
